## Europäisches Patentamt

## European Patent Office

## Office européen des brevets

(11) Publication number: **0 168 184**

**B1**

(12) **EUROPEAN PATENT SPECIFICATION**

(45) Date of publication of patent specification: **05.09.90**

(51) Int. Cl.⁵: **F 16 D 23/06**

(21) Application number: **85304288.5**

(22) Date of filing: **14.06.85**

(54) Inertia lock type synchronous clutch mechanism.

(30) Priority: **14.06.84 JP 120742/84**

(43) Date of publication of application:
**15.01.86 Bulletin 86/03**

(45) Publication of the grant of the patent:
**05.09.90 Bulletin 90/36**

(84) Designated Contracting States:
**DE FR IT**

(56) References cited:
**DE-A-2 030 619**
**DE-A-3 225 201**
**FR-A-2 390 633**
**GB-A-1 273 898**
**US-A-2 190 964**
**US-A-2 364 331**

(73) Proprietor: **HONDA GIKEN KOGYO KABUSHIKI
KAISHA**
**27-8, Jingumae, 6-chome**
**Shibuya-ku, Tokyo 150 (JP)**

(72) Inventor: **Kudo, Satoru**
**3-8-2, Shimizugaoka**
**Fuchu-shi Tokyo (JP)**
Inventor: **Nishimura, Sadanori**
**299-10, Tsuchiya**
**Omiya-shi Saitama (JP)**

(74) Representative: **Leale, Robin George et al**
**FRANK B. DEHN & CO. Imperial House 15-19
Kingsway**
**London WC2B 6UZ (GB)**

Courier Press, Leamington Spa, England.

## Description

This invention relates to an inertia lock type synchronous clutch mechanism particularly but not exclusively for use in a vehicular gear transmission or the like.

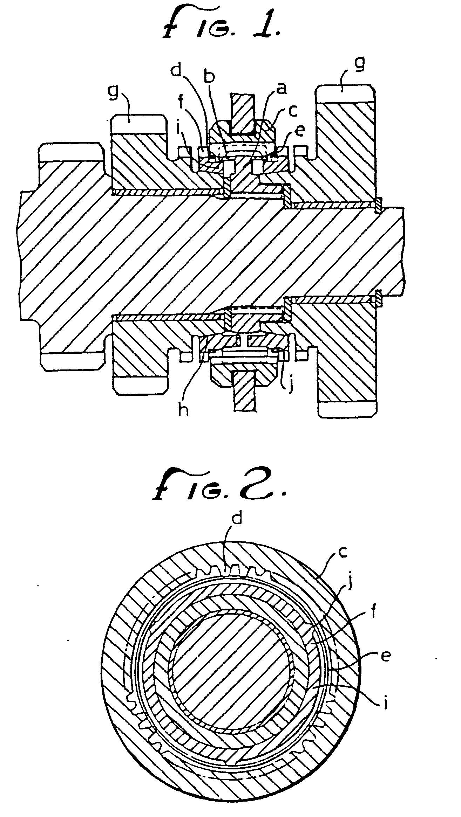

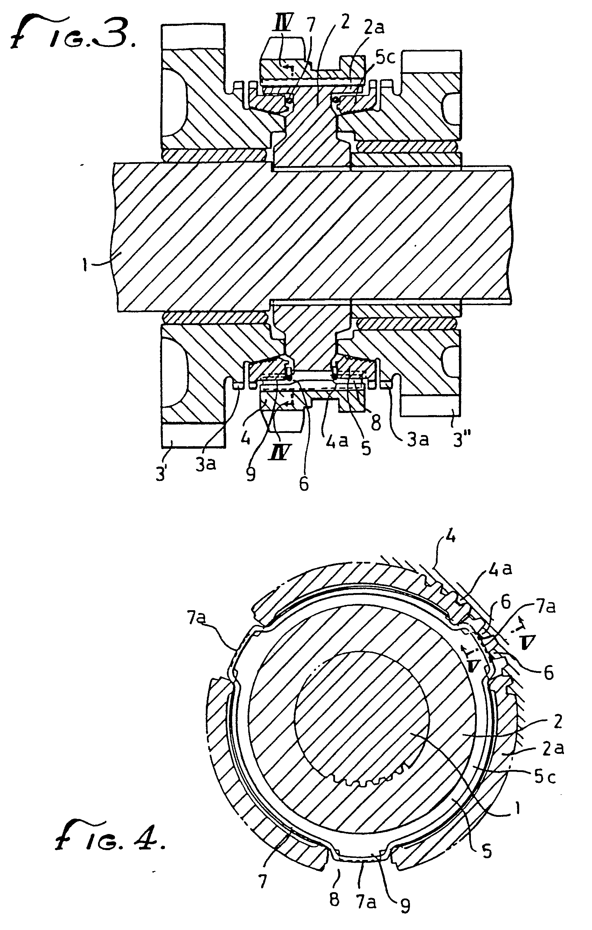

A mechanism of this general type is known in the prior art, for example from Japanese Patent Laid-Open No. 48-24096, and is illustrated by the accompanying "Prior Art" Figs. 1 and 2. Here an inertia lock type synchronous clutch mechanism has elastic ring members e on blocking rings f that are engageable by a sleeve c splined to a ring portion b on the outer circumference of a clutch hub a by way of a plurality of sloping cam portions d protruding from the inner circumference of the sleeve c, so that blocking rings f are moved axially into frictional engagement with tapered cone portions h of the synchronized gears g through the force applied to the ring members e by the axial shifting of the sleeve c.

In this known mechanism each of the said ring members e is generally in the form of a circular elastic ring which is mounted on the outer circumference of the root portion of a boss portion e of its associated blocking ring f. Such a mechanism has the following disadvantages:

Firstly, in order for each of the elastic ring members e to be allowed to be displaced radially inwardly at its portions engaged by the cam portions d, it is necessary that the root portion of the boss portion i of the blocking ring be made radially smaller than the ring members e except at support lands j for the said ring members, with the result that the boss portion i is undesirably thinned at its root portion.

Secondly, each of the elastic ring members is bulged and deformed radially outwardly at its portions between the respective cam-engaged portions, when pressed and deformed radially inwardly by the cam portions d. This makes it necessary for the splines on the inner circumference of the sleeve c to be made undesirably shallow, so that they are not interfered with by such bulged portions of the rings.

It is known from FR-A-2 390 633 to provide an inertia lock type synchronous clutch mechanism in which an elastic ring member is engageable by a sleeve, splined to a rim portion on the outer circumference of a clutch hub, through a plurality of sloping cam portions protruding from the inner circumference of said sleeve, for the ring member to axially move a blocking ring into frictional engagement with a tapered cone portion of a synchronized gear by the axial shifting of said sleeve, the said ring member being located within the inside circumference of said hub rim portion, said hub rim portion being formed, at circumferential locations corresponding to said cam portions, with notches which extend in the axial direction, and said ring member having radially outwardly protruding portions arranged to fit in respective ones of said notches for engagement of said protruding portions by said cam portions, wherein the blocking ring has a boss portion extending within the inside circumference of the hub rim portion with an end face arranged to abut against a portion of the ring member during said axial shifting of the sleeve.

According to the invention such apparatus is characterised in that said portion of the ring member has a flat side face which extends perpendicularly to the axis of rotation and the blocking ring end face extends in the same direction, the blocking ring end face and the ring member side face being arranged to engage each other in face-to-face relationship during said shifting.

With such an arrangement the blocking ring is reliably centred with respect to the tapered cone portion of the synchronised gear and frictionally engaged therewith without the possibility of being loaded in an offset manner in the radial direction.

Preferably the clutch hub is positioned between a pair of transmission gears on a shaft and has a rim portion facing each gear, each gear having a tapered cone portion for frictional engagement by a respective blocking ring axially movable by a respective elastic ring member.

An embodiment of the invention will now be described by way of example, and in comparison with the aforementioned prior art mechanism, with reference to the accompanying drawings, in which:

Fig. 1 is a longitudinal sectional view of an example of a prior art mechanism;

Fig. 2 is a transverse sectional view of the prior art mechanism shown in Fig. 1;

Fig. 3 is a longitudinal sectional view of a synchronous clutch mechanism according to this invention;

Fig. 4 is a transverse sectional view of the mechanism of Fig. 3 taken substantially on the line IV-IV of Fig. 3; and

Fig. 5 is an enlarged longitudinal sectional view taken substantially on the line V-V of Fig. 4, illustrating the mechanism in a neutral position.

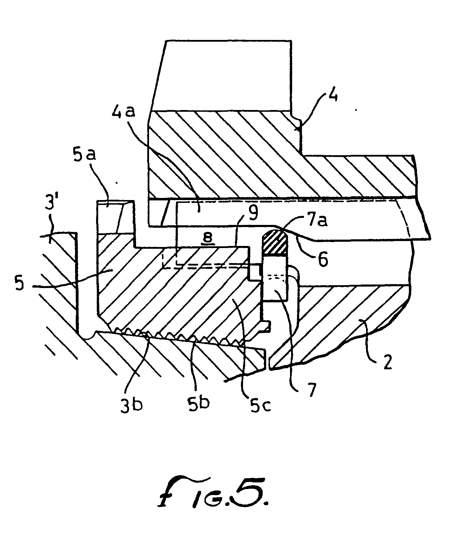

Figures 3 to 5 of the drawings show an embodiment of the present invention as applied to an inertia lock type synchronous clutch mechanism adapted for 1st-2nd speed change in a vehicular gear transmission, but it is to be understood that the invention is equally applicable to other gears and transmissions.

An output shaft 1 of the transmission has 1st and 2nd speed synchronous gears 3' and 3'' rotatably mounted thereon on opposite axial sides of an intermediate clutch hub 2 which is fixed on the shaft 1. A shift sleeve 4 is splined to a rim portion 2a on the outer circumference of the clutch hub 2 in a manner so that the inner circumferential splines 4a of the sleeve 4 and the external splines 3a of each of the gears 3' and 3'' are able to mesh with each other upon axial shifting of the sleeve 4 from a neutral position (as shown) to one or other axial side by means of a shift fork (not shown), to effect selective connection of either of the gears 3' and 3'' to the shaft 1. In order for the rotation of the gear 3' or 3'' to be synchronized with the sleeve 4 during that meshing engagement, there is a blocking ring 5 mounted on a tapered cone portion 3b of each of the gears 3' and 3'' adjacent the hub 2, each of which blocking rings 5 has splines 5a on its outer circumference and a threaded tapered internal surface 5b. Each of the blocking rings 5 is engaged with the hub 2 in a manner whereby it can rotate relative to the hub by at least one half pitch of the splines, as will be described hereinafter. Moreover, the sleeve 4 is formed with a plurality of, e.g. three, radially sloping cam portions 6 each comprising of a pair of cams protruding from each axial end of the sleeve 4 and arranged so that the three cam portions 6 are angularly spaced by 120 degrees. Mounted between the sleeve 4 and each of the blocking rings 5 is a respective elastic ring member 7 arranged to be engaged by the cam portions 6 of each pair. With this construction, as the sleeve 4 is shifted from its neutral position to either axial side, e.g. toward the 1st speed synchronized gear 3', the blocking ring 5 on that side is first moved axially by its associated elastic ring member 7 into frictional engagement with the tapered cone portion 3b of the gear 3', by way of the threaded tapered surface 5b forming the inner circumference of the blocking ring 5. This causes the ring 5 to be rotated a small amount relative to the clutch hub 2 so that it is indexed into the state in which chamfers at the end portions of the splines 4a of the sleeve 4 and chamfers of the splines 5a of the blocking ring 5 face each other. Further axial movement of the sleeve 4 from that state causes the elastic ring member 7 to be pressed radially inwardly at the respective cam portions 6, and the two chamfers abut against each other to stop the relative rotational movement of the sleeve 4 and to force the ring 5 into frictional engagement with the tapered cone portion 3b on the gear 3', so that synchronization between the sleeve 4 and the gear 3' is effected through the ring 5. After completion of this synchronization, the frictional torque transmitted through the ring 5 and cone portion 3b disappears, to release the blocking force of the sleeve 4, whereupon the sleeve is allowed to move axially so that its splines 4a slide through splines 5a of the ring 5 and into engagement with the splines 3a of the gear 3'.

The operation of the clutch mechanism as thus far described is not substantially different from that of the aforementioned prior art mechanism. However, in this embodiment of the present invention, each of the elastic ring members 7 is located within the inside circumference of the rim portion 2a of the clutch hub 2 whilst each of the blocking rings 5 has its boss portion 5c extending within the said inside circumference of the rim portion 2a and has its end face abutting against the ring member 7. Moreover, the rim portion 2a is formed at three circumferentially spaced portions, corresponding to the respective cam portions 6, with respective notches 8 which extend in the axial direction, and each ring member 7 is formed with three circumferentially spaced outwardly convex portions 7a each protruding into a respective notch 8 and arranged to be engaged by a respective cam portion 6. In the illustrated construction, each of the blocking rings 5 is formed on the outer circumference of its boss portion 5c with engagement lands 9 which are arranged to engage with the respective notches 8 whilst permitting some circumferential play, so that each of the rings 5 is engaged with the hub 2 in such a manner as to be able to rotate relative thereto by at least one half pitch of the splines, as mentioned hereinbefore. The respective convex portions 7a are here formed by partially deforming each of the elastic ring members 7 radially outwardly at the three locations concerned. Alternatively the outwardly deformed portions 7a may be formed by integrally protruding tongues on the elastic ring members 7, extending at an inclination with respect to the axial direction. In this latter case, the convex lands 7a would be axially offset with respect to the body of each of their elastic ring members 7, so that the cam portions would have to be formed nearer the chamfers of the splines 4a of the sleeve 4 to take account of that offset. However, in that case there is the risk that the cam portions 6 will become burred as the chamfers are worn in use, which in turn can cause wear on the convex portions 7a by those burrs, unless great care is taken in the design shape and dimensions.

The operation of the illustrated mechanism is as follows. By shifting the sleeve 4 in either axial direction, first the cam portions 6 formed on the inner circumference of the sleeve are brought into abutment with the convex portions 7a of the corresponding elastic ring member 7 so that this ring member is caused to move in the axial direction, whereby the corresponding blocking ring 5 is also caused to move in the same axial direction by the ring member 7 abutting against the end face of the boss portion 5c of the ring 5. As the ring member 7 is stably supported in the inner circumference of the rim portion 2a of the clutch hub 2, it is engaged uniformly at its convex portions 7a with the respective cam portions 6 and moved uniformly in the axial direction when the sleeve 4 is shifted. Since each of the blocking rings 5 is caused to have its end face abutting against the side face of its associated ring members 7 in face-to-face relationship, moreover, the blocking ring is reliably centered with respect to its corresponding tapered cone portion and frictionally engaged therewith without the possibility of being loaded in an offset manner in the radial direction, so that the indexing action and the balking action are properly accomplished to achieve synchronization.

Thus, in the present mechanism, the elastic ring members are mounted in the inner circumference of the rim portion of the clutch hub, and the ring members are caused to abut against the end faces of the blocking rings 5. As a result, centering of the ring members at the beginning of the shifting action of the sleeve is ensured, so as to effect reliable synchronization even if the shifting action is abrupt. Even with radial displacement of one of the ring members, no interference is caused between the ring member and the boss portion of the corresponding blocking ring and the splines of the shift sleeve. This makes it possible to increase the size of both the external diameter of the boss portion and the depth of the shift sleeve splines, without being adversely effected by that displacement.

## Claims

1. An inertia lock type synchronous clutch mechanism in which an elastic ring member (7) is engageable by a sleeve (4), splined to a rim portion (2a) on the outer circumference of a clutch hub (2), through a plurality of sloping cam portions (6) protruding from the inner circumference of said sleeve (4), for the ring member (7) to axially move a blocking ring (5) into frictional engagement with a tapered cone portion (3b) of a synchronized gear (3', 3'') by the axial shifting of said sleeve (4), the said ring member (7) being located within the inside circumference of said hub rim portion (2a), said hub rim portion being formed, at circumferential locations corresponding to said cam portions (6), with notches (8) which extend in the axial direction, and said ring member (7) having radially outwardly protruding portions (7a) arranged to fit in respective ones of said notches for engagement of said protruding portions by said cam portions, wherein the blocking ring (5) has a boss portion (5c) extending within the inside circumference of the hub rim portion (2a) with an end face arranged to abut against a portion of the ring member (7) during said axial shifting of the sleeve, characterised in that said portion of the ring member (7) has a flat side face which extends perpendicularly to the axis of rotation and the blocking ring end face extends in the same direction, the blocking ring end face and the ring member side face being arranged to engage each other in face-to-face relationship during said shifting.

2. A mechanism as claimed in claim 1, wherein said radially outwardly protruding portions (7a) of said ring member (7) comprise portions of the length of the same which are displaced radially outwardly to form outwardly convex portions thereof.

3. A mechanism as claimed in claim 1 or 2, wherein the clutch hub (2) is positioned between a pair of transmission gears (3', 3'') on a shaft (1) and has a rim portion (2a) facing each gear, each gear having a tapered cone portion (3b) for frictional engagement by a respective blocking ring (5) axially movable by a respective elastic ring member (7).

## Patentansprüche

1. Sperrsynchronisationsmechanismus für eine Kupplung, bei dem ein elastisches Ringglied (7) durch eine Buchse (4) angreifbar ist, die an einem Felgenteil (2a) an dem Außenumfang einer Kupplungsnabe (2) durch eine Mehrzahl von ansteigenden Schulterteilen (6), die von dem Innenumfang der Buchse (4) hervorstehen, keilgenutet ist, damit durch axiales Verschieben der Buchse (4) das Ringglied (7) einen Sperrring (5) axial in Drehangriff mit einem zugespitzten Kegelteil (3b) eines synchronisierten Getriebes (3', 3'') bewegt, das Ringglied (7) innerhalb des Innenumfangs des Nabenfelgenteils (2a) angeordnet ist, das Nabenfelgenteil an Umfangsorten entsprechend der Schulterteile (6) mit sich in axialer Richtung erstreckenden Kerben (8) geformt ist, und das Ringglied (7) radial nach außen hervorstehende Teile (7a) hat, die in die entsprechenden Kerben zum Angriff der hervorsthenden Teile durch die Schulterteile passend angeordnet sind, wobei der Sperrring (5) ein Wulstteil (5c), das sich innerhalb des Innenumfangs des Nabenfelgenteils (2a) erstreckt, mit einer Endfläche hat, die zum Abstützen gegen einen Teil des Ringteils (7) während des axialen Verschiebens der Buchse angeordnet ist, dadurch gekennzeichnet, daß das Teil des Ringglieds (7) eine flache Seitenfläche hat, die sich senkrecht zur Drehachse erstreckt, und sich die Endfläche des Sperrrings in dieselbe Richtung erstreckt, und die Endfläche des Sperrrings und die Seitenfläche des Ringglieds angeordnet sind, um während des Verschiebens in einander gegenüberliegendem Verhältnis einander anzugreifen.

2. Mechanismus nach Anspruch 1, bei dem die radial nach außen hervorstehenden Teile (7a) des Ringglieds (7) Teile derselben Länge aufweisen, um die sie radial nach außen verschoben werden, um daraus nach außen konvexe Teile zu formen.

3. Mechanismus nach Anspruch 1 oder 2, bei dem die Kupplungsnabe (2) zwischen einem Paar Übertragungszahnrädern (3', 3'') auf einer Welle (1) angeordnet ist und gegenüber jedem Zahnrad ein Felgenteil (2a) hat, und jedes Zahnrad ein zugespitztes Kegelteil (3b) zum Dreheingriff durch einen entsprechenden Sperring (5) hat, der durch ein entsprechendes elastisches Ringglied (7) axial beweglich ist.

## Revendications

1. Mécanisme d'embrayage de synchronisation du type à blocage par inertie, dans lequel un organe annulaire élastique (7) peut être mis en prise avec un manchon (4) accouplé par cannelures avec une couronne (2a) de la circonférence externe d'un moyeu d'embrayage (2), par l'intermédiaire de plusieurs rampes de came inclinées (6) faisant saillie sur la circonférence interne du manchon (4), pour que l'organe annulaire (7) déplace axialement une bague de blocage (5) en contact à frottement avec une portion conique (3b) d'un Pignon synchronisé (3', 3'') par le déplacement axial du manchon (4), l'organe annulaire (7) étant situé à l'intérieur de la circonférence interne de la couronne du moyeu (2a), cette couronne du moyeu comportant, en des points circonférentiels correspondants aux cames (6), des encoches (8) qui s'étendent dans le sens axial, et l'organe annulaire (7) comportant des portions (7a) en saillie radiales vers l'extérieur, agencées pour s'ajuster chacune dans une encoche respective en vue de la coopération de ces portions en saillie avec les cames, dans lequel la bague de blocage (5) comporte un bossage (5c) s'étendant à l'intérieur de la circonférence interne de la couronne (2a) du moyeu et ayant une face d'extrémité agencée pour venir en butée contre une partie de l'organe annulaire (7) lors du déplacement axial du manchon, caractérisé en ce que ladite portion de l'organe annulaire (7) a une face latérale plate qui s'étend perpendiculairement à l'axe de rotation, et la face d'extrémité de la bague de blocage s'étend dans le même sens, la face d'extrémité de la bague de blocage et la face latérale de l'organe annulaire étant agencées pour être en contact l'une avec l'autre dans une relation face à face pendant ledit déplacement.

2. Mécanisme suivant la revendication 1, dans lequel les parties (7a) en saillie radiale vers l'extérieur de l'organe annulaire (7) sont constituées par des portions de la longueur de celui-ci qui sont décalées radialement vers l'extérieur pour former des parties de celui-ci convexes vers l'extérieur.

3. Mécanisme suivant la revendication 1 ou 2, dans lequel le moyeu d'embrayage (2) est disposé entre deux pignons de transmission (3', 3'') sur un arbre (1) et a une couronne (2a) faisant face à chaque pignon, chaque pignon ayant une partie tronconique (3b) avec laquelle de contact à frottement avec une bague de blocage respective (5) déplaçable axialement par un organe annulaire élastique respectif (7).

EP  0 168 184  B1

# $f$IG. 1.

# $f$IG. 2.

FIG.3.

FIG.4.

*f* IG.5.